(19) Europäisches Patentamt
European Patent Office
Office européen des brevets

(11) EP 1 045 009 A1

(12) EUROPEAN PATENT APPLICATION

(43) Date of publication:
**18.10.2000 Bulletin 2000/42**

(51) Int. Cl.[7]: **C09D 4/06**, C08F 283/12, C09D 183/10

(21) Application number: **00108377.3**

(22) Date of filing: **17.04.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **16.04.1999 US 293381**
**16.04.1999 US 293822**

(71) Applicant:
**DOW CORNING CORPORATION**
**Midland Michigan 48686-0994 (US)**

(72) Inventors:
- **Blizzard, John Donald**
  **Michigan 48708 (US)**
- **Tonge, James Steven**
  **Sanford Michigan 48657 (US)**
- **Popa, Paul Joseph**
  **Auburn Michigan 48611 (US)**

(74) Representative:
**Sternagel, Fleischer, Godemeyer & Partner**
**Patentanwälte**
**Braunsberger Feld 29**
**51429 Bergisch Gladbach (DE)**

# (54) Heat curable silcone acrylate coating compositions

(57) The present invention refers to a heat-curable coating composition containing

component I) comprising components A), B) and C); wherein

component A) is at least one multifunctional acrylate;
component B) is a product obtained by a method comprising co-hydrolyzing and co-condensing a composition comprising ingredients i), ii) and iii); wherein

ingredient i) is at least one alkoxy-functional organometallic compound having a formula $M(OR)_4$, wherein M is selected from Si and Ti and each OR is independently an alkoxy group:
ingredient ii) is at least one alkoxysilane having a formula

$$\begin{array}{l} \quad R'_c \\ \quad | \\ X_aSi(OR)_b \end{array}$$

wherein each OR is as defined above, each X is independently a monovalent organic group that renders the alkoxysilane capable of copolymerization with A) the multifunctional acrylate and each R' is independently a monovalent hydrocarbon group; and a is 1, 2 or 3; b is 1, 2 or 3; c is 0. 1 or 2; and a + b + c = 4 ; and
ingredient iii) is a predetermined quantity of water sufficient to cause the co-hydrolysis and permit the co-condensation without gelling the composition or causing a precipitate to form therefrom; and

component C) comprises a catalytic quantity of a peroxide; and optionally

component II) comprising an organic coating composition and to a method of preparing said composition, a method for application of said composition, and to a coated substrate obtainable thereby.

EP 1 045 009 A1

## Description

This invention relates to the field of organically-modified, heat-curable siloxane resin compositions, and more particularly to such a composition that includes a multifunctional acrylate, the reaction product of a tetraalkoxy organometallic compound, an alkoxysilane and a peroxide. The alkoxysilane has at least one additional functional group that renders the alkoxysilane copolymerizable with the acrylate. The composition is heat curable and has substantial abrasion, mar, chemical, water and stain resistance as well as weatherability.

Radiation curable and thermoset coatings can be used for the following applications: flooring (top coat), furniture, decorative fixtures (plates, faucets, door handles, etc.) and as general protective coatings. Suitable substrates include wood, plastics (vinyl, ABS, etc.), cellulosic (wood, paper), vitreous (ceramic), stone (marble, granite), synthetic polymers including coatings such as CORIAN™, FORMICA™, polyesters, acrylic-polyesters, polyurethanes, epoxies, alkyds, etc. and metals (steel, copper, brass, gold).

Radiation curable and thermoset coatings can also be used as top coats in the automotive coatings markets. Top coats for the automotive industry (clear or colored) require an extremely high degree of clarity to achieve the desired visual effects, including high gloss and high distinctness of image. Other important requirements of automotive coatings is mar resistance and increasing customer expectations of durability of the vehicle finish.

An example of a radiation-curable abrasion resistant coating composition is disclosed in U.S. Patent 5,840,428. This patent discloses an organically modified radiation curable siloxane and method for its preparation. The siloxane is prepared by reacting a composition containing a multifunctional acrylate with a reaction product formed by co-hydrolysis and co-condensation of an alkoxyfunctional organometallic compound, an alkoxysilane and water. The composition is reacted (cured) by exposure to ultra-violet radiation.

U.S. Patent 4,224,211 discloses a heat curable coating composition. The coating composition improves the surface hardness and chemical resistance of substrates such as plastic, wood, metal and the like. The composition comprises A) partially hydrolyzed silicon compounds and B) acrylic copolymers. The partially hydrolyzed silicon compound consists essentially of co-partial hydrolyzates of an organic silicon compound of the formula $R_nSi(OR')_{4-n}$, where n is 1-3, R is a hydrocarbon group and R' is an alkyl group; and a tetraalkoxysilane, or a mixture of partial hydrolyzes of each. The acrylic copolymer is a copolymer of an alkyl (meth)acrylate and a hydroxyalkyl (meth)acrylate. The coating composition may contain a catalyst such as an acid, an organic amine, a metal carboxylate, a metal thiocyanate, a metal nitrite or an organic tin compound. However, this patent does not disclose the use of diacyl peroxides or peroxydicarbonates in the coating composition.

Conventional top coats suffer from the drawback of inadequate mar resistance. "Mar resistance" is the ability of a coating to resist relatively fine scratches that spoil the appearance of the coating. These surface scratches can be caused, for example, by car washing. Such surface scratches are more noticeable in conventional clear coat and color coat systems especially with darker colors.

Examples of top coats are disclosed in the following patent applications. Great Britain Patent Publication 0 620 692 discloses a polymerizable polysiloxane compound and copolymers thereof. The compound is prepared by cohydrolysis of alkenyl- functional chlorosilanes to yield a siloxane polymer that is crosslinked by reaction of the alkenyl groups by heat or peroxides.

Japanese Patent Publication 05-209031 discloses a resin composition that can be used as an automotive clear coat. The composition can be cured by heat or by exposure to light. The composition comprises a polyorganosilsesquioxane, a curable graft copolymer, a photosensitizer and/or a radical polymerization initiator.

Heat curable silicone-acrylate coatings are desirable for some applications. Therefore, it is an object of this invention to provide a heat curable silicone acrylate coating composition. It is a further object of this invention to provide a method for preparing the silicone acrylate coating composition. It is a further object of the invention to provide a method for curing the silicone acrylate coating composition to form a silicone acrylate coating with abrasion, mar, chemical, water, stain resistance and weatherability.

Another object of this invention is to provide a composition that can be used to form a clear or pigmented coating with good mar resistance and a method for preparation of the composition. It is a further object of this invention to provide a composition that, when cured, forms a coating having a clear glossy finish; weatherability and excellent abrasion, mar, chemical, water and stain resistance.

This invention relates to a heat curable silicone acrylate coating composition and method for its preparation.

This silicone acrylate coating composition contains

component I) comprising components A), B) and C); wherein

component A) is at least one multifunctional acrylate;

component B) is a product obtained by a method comprising co-hydrolyzing and co-condensing a composition comprising ingredients i), ii) and iii); wherein

ingredient i) is at least one alkoxy-functional organometallic compound having a formula $M(OR)_4$, wherein M is selected from Si and Ti and each OR is independently an alkoxy group;

ingredient ii) is at least one alkoxysilane having a formula

$$\begin{array}{c} R'_c \\ | \\ X_aSi(OR)_b \end{array}$$

wherein each OR is as defined above, each X is independently a monovalent organic group that renders the alkoxysilane capable of copolymerization with A) the multifunctional acrylate and each R' is independently a monovalent hydrocarbon group; and a is 1, 2 or 3; b is 1, 2 or 3; c is 0, 1 or 2; and $a + b + c = 4$ ; and ingredient iii) is a predetermined quantity of water sufficient to cause the co-hydrolysis and permit the co-condensation without gelling the composition or causing a precipitate to form therefrom; and

component C) comprises a catalytic quantity of a peroxide; and optionally

component II) comprising an organic coating composition.

Component A) comprises at least one multifunctional acrylate. Preferably, the amount of component A) is 48.7 to 93.7 weight percent, based on the total weight of components A) and B). For the purposes of this invention 'multifunctional acrylate' denotes a monomer or polymer that contains two or more functional groups selected from acryloxy and methacryloxy groups. The multifunctional acrylates may be used singly or in combination.

The multifunctional acrylates used in this composition must be compatible with the remaining components of the invention, meaning that they do not have a deleterious effect that defeats the desired application for the composition. However, the tendency of a given acrylate to produce a deleterious effect can be overcome in certain circumstances. For example, the use of certain multifunctional acrylates may raise the viscosity of the composition such that the composition will not provide a thin abrasion-resistant coating on a substrate. If, however, the composition can be rendered usable by the addition of an appropriate solvent, then the use of that multifunctional acrylate is not considered to be excluded from this invention.

Examples of multifunctional acrylate monomers suitable for use as component A) include diacrylates, triacrylates, tetraacrylates and pentaacrylates. Suitable diacrylates include 1,6-hexanediol diacrylate, 1,4-butanediol diacrylate, ethylene glycol diacrylate, diethylene glycol diacrylate, tetraethylene glycol diacrylate, tripropylene glycol diacrylate, neopentyl glycol diacrylate, 1,4-butanediol dimethacrylate, poly(butanediol) diacrylate, tetraethylene glycol dimethacrylate, 1,3-butylene glycol diacrylate, triethylene glycol diacrylate, triisopropylene glycol diacrylate, polyethylene glycol diacrylate and bisphenol A dimethacrylate. Suitable triacrylates include trimethylolpropane triacrylate, trimethylolpropane trimethacrylate, pentaerythritol monohydroxy triacrylate, and trimethylolpropane triethoxy triacrylate. Suitable tetraacrylates include pentaerythritol tetraacrylate and di-trimethylolpropane tetraacrylate. Suitable pentaacrylates include dipentaerythritol (monohydroxy) pentaacrylate. These multifunctional acrylate monomers are commercially available from Aldrich Chemical Company, Inc., Milwaukee, Wisconsin.

Examples of some specific multifunctional acrylate polymers suitable for use as component A) include epoxy acrylates, polybutadiene diacrylate, urethane acrylates and polyester acrylates.

Epoxy acrylates and polybutadiene diacrylate are available from Sartomer Company, Inc. of Exton PA. The epoxy acrylates include bisphenol A epoxy diacrylate, which is sold under the designation CN104. CN104 has a viscosity of 3500 mPa • s at 65°C. and a specific gravity of 1.15. Polybutadiene diacrylate, which is sold under the designation CN300, has a molecular weight of 3,000, and a viscosity of 4,500 - 5,000 mPa • s at 25°C.

Urethane acrylates and polyester acrylates are available from UBC Radcure, Inc. of Louisville, KY. The urethane acrylates include hexafunctional aromatic urethane acrylate with an acrylated polyol diluent, which is sold under the designation EBECRYL® 220. EBECRYL® 220 has a molecular weight of 1,000 and a viscosity of 28,000 mPa • s at 25°C. Aliphatic urethane diacrylate is sold under the designation EBECRYL® 230. EBECRYL® 230 has a molecular weight of 5,000 and a viscosity of 40,000 mPa • s at 25°C. Polyester acrylates include tetrafunctional polyester acrylate which is sold under the designation EBECRYL® 80. EBECRYL® 80 has a molecular weight of 1,000 and a viscosity of 3,500 cps at 25°C.

In general, when monomeric multifunctional acrylates are used in the silicone acrylate coating composition of this invention, the silicone acrylate coating composition cures to form a silicone acrylate coating having hard, abrasion-resistant characteristics. When polymeric multifunctional acrylates are used in the silicone acrylate coating composition, it generally cures to form a slightly softer, more flexible silicone acrylate coating. There is at least some correlation between the use of polymeric multifunctional acrylates and decreased gas permeability of the silicone acrylate coating. The use of blends of monomeric multifunctional acrylates and polymeric multifunctional acrylates in the silicone acrylate coating composition can be balanced to provide desired properties to the silicone acrylate coating of the invention.

Component B) is a reaction product. Preferably, the amount of component B) is 6.3 to 51.3 weight percent, based on the total weight of components A) and B). Component B) is formed from ingredient i) at least one alkoxy-functional organometallic compound, ingredient ii) at least one alkoxysilane and ingredient iii) a predetermined quantity of water. Ingredient iv). an optional catalytic amount of a siloxane polymerization catalyst, can also be added to form B) the reaction product.

Ingredient i) is the alkoxy-functional organometallic compound. 'Organometallic compound' includes compounds based upon silicon and titanium. Ingredient i) has the formula $M(OR)_4$, wherein M is selected from Si and Ti and each OR is independently an alkoxy group. Preferably, the alkoxy groups have from one to four carbon atoms. Examples of ingredient i) include tetraethoxysilane (also called tetraethyl orthosilicate) and tetrabutyl titanate. Preferably, the amount of ingredient i) is 15 to 85, more preferred 20 to 75, most preferred 20 to 60 weight percent, based on the combined weight of ingredients i), ii), iii) and iv).

Ingredient ii) is the alkoxysilane. Ingredient ii) has the formula

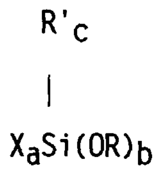

wherein each OR is as defined above and each X is a monovalent organic group that renders ii) the alkoxysilane capable of copolymerization with A) the multifunctional acrylate. Preferably, the monovalent organic group X of the alkoxysilane comprises at least one unsaturated group and is selected from vinyl, hexenyl, methacryloxy, acryloxy, styryl and vinyl ether groups. Preferably, the amount of ingredient ii) is 10 to 80, more preferred 15 to 70, most preferred 20 to 60 weight percent, based on the combined weights of ingredients i), ii), iii) and iv).

Thus, examples of ingredient ii) include vinyltrimethoxysilane, vinyltriethoxysilane, vinyldimethoxymethylsilane, (all available from PCR, Inc., Gainesville, FL), 3-(methacryloxy)propyltrimethoxysilane, and 3-(acryloxy)propyltrimethoxysilane.

When X is a monovalent unsaturated hydrocarbon group, copolymerization of ingredient ii) with component A) takes place under conditions of free radical polymerization when the composition of the invention is cured.

Ingredient iii) is a predetermined quantity of water. Preferably, the amount of ingredient iii) is 2 to 72, more preferred 5 to 60, most preferred 5 to 30 weight percent, based on the combined weights of ingredients i), ii), iii) and iv). More preferably, the predetermined quantity of water is 10 to 25 weight parts, based on 100 weight parts of ingredients i) and ii). The importance and selection of the predetermined quantity are discussed herein below.

Ingredient iv) is a siloxane polymerization catalyst. Preferably, the amount of ingredient iv) is 3 to 71, more preferred 5 to 60, most preferred 10 to 50 weight percent, based on the combined weights of ingredients i), ii), iii) and iv). Such catalysts are known in the art for promoting the formation of resin networks in the hydrolysis and condensation reactions of alkoxysilanes and other alkoxy-functional organometallic compounds. Suitable examples of siloxane polymerization catalysts include strong protonic acids such as $H_2SO_4$ and $HClO_4$, trifluoromethane sulfonic acid, and a variety of Lewis Acids. Also included are supported catalysts such as $H_2SO_4$-treated montmorillonite clay. Basic siloxane polymerization catalysts include KOH, NaOH and various amines. Acrylic acid is preferred as the siloxane polymerization catalyst because it is compatible with A) the multifunctional acrylate.

The use of iv) the siloxane polymerization catalyst is highly preferred, but considered optional. For example, when an alkoxy-functional aminosilane is used to form ingredient ii), the residual alkalinity of the amino groups is sufficient to promote the hydrolysis and condensation of ingredient i) and ingredient ii) (as explained in detail below,) albeit at a much slower rate and not to the same extent as when the catalyst ingredient iv) is employed.

Those skilled in the art will understand that while the composition of the present invention does not require the presence of colloidal silica, neither is it prohibited. Likewise, while many embodiments of the present invention can be successfully formulated without the use of a polar solvent, its use for adjusting properties such as viscosity is not prohibited.

Those skilled in the art will further appreciate that the selection of specific species of component A) the multifunctional acrylate, ingredient i) the alkoxy-functional organometallic compound and ingredient ii) the alkoxysilane, will depend primarily upon the properties desired for the end-use of the composition (e.g. abrasion resistance or chemical resistance) and cost.

Component C) is a peroxide selected such that it renders the composition heat curable. The peroxide can be dissolved in a suitable solvent. Suitable solvents include ketones, esters, alcohols and aromatic hydrocarbons.

Suitable classes of peroxides include diacyl peroxides and peroxydicarbonates.

Suitable diacyl peroxides include those having a general formula:

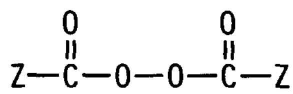

where Z is a monovalent group, such as a monovalent hydrocarbon group. Suitable peroxydicarbonates include those having a general formula:

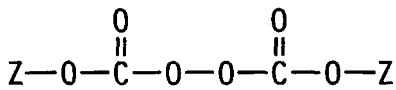

where Z is as defined above. Diacyl peroxides are preferred.

Examples of suitable diacyl peroxides include benzoyl peroxide, diisononanoyl peroxide, decanoyl peroxide, lauroyl peroxide and succinic acid peroxide. Benzoyl peroxide is preferred. Diacyl peroxides are known in the art and are commercially available. Some suitable diacyl peroxides from Atochem North America, Inc. of Buffalo, New York are presented in Table A.

Table A

| Diacyl Peroxides | |
|---|---|
| Chemical Name | Trade Name(s) |
| Diisononanoyl Peroxide | LUPERSOL® 219-M60 |
| Decanoyl Peroxide | DECANOX®-F |
| Lauroyl Peroxide | ALPEROX®-F |
| Succinic Acid Peroxide | SUCCINIC ACID PEROXIDE |

Table A (continued)

| Diacyl Peroxides | |
|---|---|
| Chemical Name | Trade Name(s) |
| Benzoyl Peroxide | LUCIDOL® -98 |
| | LUCIDOL® -78 |
| | LUCIDOL®-70 |
| | LUPERCO® AFR-400 |
| | LUPERCO® AFR-250 |
| | LUPERCO® AFR-500 |
| | LUPERCO® ANS |
| | LUPERCO® ANS-P |
| | LUPERCO® ATC |
| | LUPERCO® AST |
| | LUPERCO® AA |
| | LUPERCO® ACP |

Examples of suitable peroxydicarbonates include di(n-propyl)peroxydicarbonate, di(sec-butyl)peroxydi-carbonate and di(2-ethylhexyl)peroxydicarbonate. Some suitable peroxydicarbonates from Atochem North America, Inc. of Buffalo, New York are presented in Table B.

Table B

| Peroxydicarbonates | |
|---|---|
| Chemical Name | Trade Name(s) |
| Di(n-propyl) Peroxydicarbonate | LUPERSOL® 221 |
| Di(sec- butyl) Peroxydicarbonate | LUPERSOL® 225 |
| | LUPERSOL® 225-M75 |
| | LUPERSOL® 225-M60 |
| Di(2-ethylhexyl) Peroxydicarbonate | LUPERSOL® 223 |
| | LUPERSOL® 223-M75 |
| | LUPERSOL® 223-M40 |

A catalytic amount of C) the peroxide is added to the composition. Typically, the amount is 0.5 to 10, preferably 2.5 to 5, parts by weight per 100 parts by weight of components A) and B). When a diacyl peroxide is used, the amount added to the composition is typically 0.5 to 10, preferably 2.5 to 5 parts by weight per 100 parts by weight of components A) and B). When a peroxydicarbonate is used, the amount added to the composition is typically 5 to 10 parts by weight per 100 parts by weight of components A) and B).

Optional components to enhance the usefulness in the coatings can also be added to component I), or if present component II), or both, in this invention. For example, diluents, solvents, adhesion promoters, leveling agents, ultraviolet light absorbers, pigments, dyes and free radical inhibitors such as phenothiazine can be included.

Component II) is an organic coating composition. The organic coating composition can be a one part or a multiple part composition. The organic coating composition comprises ingredient $\alpha$) a resin, ingredient $\beta$) a cross-linking agent, and optionally ingredient $\gamma$) an acid catalyst. Component II) preferably contains 40 to 95 weight percent of ingredient $\alpha$), 5 to 60 weight percent of ingredient $\beta$) and 0 to 2 weight percent of ingredient $\gamma$) based on the total amount of ingredients $\alpha$), $\beta$), and $\gamma$). More preferably, the amount of ingredient $\alpha$) is 50 to 80 weight percent, the amount of ingredient $\beta$) is 20 to 50 weight percent and the amount of ingredient $\gamma$) is 0 to 0.5 weight percent. Selection of the optimal amount of cross-linking agent depends on the desired properties (e.g., flexibility) of the coating as well as the intended

use of the coating. One skilled in the art would be able to select an appropriate amount of cross-linking agent.

Suitable α) resins, β) cross-linking agents and γ) acid catalysts for use in the organic coating composition are described in the Kirk-Othmer Encyclopedia of Chemical Technology. J. Kroschwitz, $4^{th}$ ed., vol. 6, pp. 669-746.

Suitable resins for ingredient α) include polyesters and acrylics. The polyesters are typically low molecular weight hydroxy-terminated oil-free polyesters. The polyesters can be used with melamine-formaldehyde cross-linking agents. Hydroxy-terminated polyesters can also be used with polyfunctional isocyanates and blocked isocyanate cross-linking agents. Polyesters are generally preferred over acrylic resins when adhesion directly to metal is required.

When highest exterior durability of the organic coating is needed, especially over primers or other coatings, acrylic resins are preferred over polyesters. Acrylic resins have higher hydrolytic stability than polyesters. Acrylic resins also have a high degree of resistance to thermal and photoxidation and to hydrolysis, which gives coatings made therefrom superior color retention, resistance to embrittlement and exterior durability.

Thermosetting acrylic resins are typically synthesized by free-radical polymerization. However, free-radical polymerization can result in a random distribution of the 2-hydroxyethyl methacrylate comonomer in the oligomer chains and hence significant fractions of nonfunctional and monofunctional molecules, unless the number average molecular weight is on the order of 3500 or higher and the average functional monomers per molecule is on the order of 3 or higher. Additionally, various techniques can be used to increase solids content. Hydroxy-functional chain transfer agents, such as 2-mercaptoethanol, can be added to reduce the probability of nonfunctional or monofunctional molecules. Careful control of temperature, initiator concentration and monomer concentration during polymerization can be used to prepare thermosetting acrylic resins with low viscosity.

The initiators are typically azo initiators or initiators containing t-amyl peroxide groups. High solids acrylic resin coatings typically contain 45 to 50 vol% solids. However, introduction of functional groups onto methacrylate oligomers synthesized by alkoxide initiated anionic polymerization can lead to narrow molecular-weight distribution, and therefore, higher solids. Some acrylic resin coatings can be made with 45 to 70 vol% solids. For example, JONCRYL® 500, an acrylic polyol available from SC Johnson of Racine, Wisconsin, can be used to make coatings having up to 70 vol% solids. Another suitable acrylic polyol is DESMOPHEN® A365, available from Bayer, of Pittsburgh, Pennsylvania. Thermosetting acrylic polyols are preferred for use in applications such as automobile and appliance top coats.

Suitable cross-linking agents for ingredient β) are disclosed in U.S. Patent 4,673,718. Suitable cross-linking agents for ingredient β) include amino-resins, epoxy resins and isocyanates.

Amino-resins are exemplified by amine-aldehyde cross-linking agents, which are suitable for crosslinking hydroxy functional materials. Typically, the cross-linking agents are reaction products of melamine or urea with formaldehyde and various alcohols containing up to and including 4 carbon atoms. Preferably, the amine-aldehyde crosslinking agents are amine-aldehyde resins such as condensation products of formaldehyde with melamine, substituted melamine, urea, benzoguanamine or substituted benzoguanamine. Preferred members of this class are methylated melamine-formaldehyde resins such as hexamethoxymethylmelamine. Particularly preferred crosslinking agents are the high solids melamine resins which have substantially 95+ percent nonvolatile content. For high solids compositions, it is important not to introduce extraneous diluents that lower the final solids content of the coating. Other suitable amine-aldehyde cross-linking agents will be apparent to one skilled in the art. Amine-aldehyde crosslinking agents are preferred for basecoat compositions. The amine-aldehyde cross-linking agent is generally included in a basecoat composition in an amount of 5 to 60 weight parts, per 100 weight parts of the composition, and preferably 20 to 40 weight parts. However, selection of the exact amount of amine-aldehyde cross-linking agent to be employed in any such composition is dependent on the desired properties of the composition as well as its intended use.

Preferred amino cross-linking agents are available from Cytec Industries of West Paterson, New Jersey, and include cross-linking agents available as under the trademark CYMEL®. CYMEL® 301, 303, 325, 1130, 1156, 1161 and 1168 are alkalated melamine aldehyde cross-linking resins. Hexamethoxymethylmelamine, which is commercially available as CYMEL® 303, is preferred.

The amine-aldehyde cross-linking agents react with hydroxy groups and are, therefore, used as cross-linking agents for resins having hydroxy groups, such as acrylic polyols. The amine-aldehyde cross-linking agents require γ) a strong acid catalyst, such as a sulfonic acid or blocked catalysts such as a salt of a sulfonic acid and a volatile amine. Examples of suitable sulfonic acids include p-toluene sulfonic acid, nonylnaphthalene-disulfonic acid and dodecylbenzene sulfonic acid. P-toluene sulfonic acid is commercially available under the tradename CYCAT® 4040, from Cytec Industries, West Paterson, New Jersey.

Epoxy resins can be used as ingredient β) cross-linking agents for resins with amine, hydroxyl and carboxylic acid or anhydride groups. The epoxy group, i.e., an oxirane, is a cyclic three-membered ether group. The epoxy resins are exemplified by bisphenol A (4,4'-(1-methyl-ethylidene)bisphenol) epoxy resins. One use for epoxy resins is as a cross-linking agent in a two-part primer for steel. One part comprises the epoxy resin and the other part comprises a polyfunctional amine. The flexibility of the coating can be controlled by selection of the polyfunctional amine. If a rigid film is needed, an amine adduct (the reaction product of a low molecular weight bisphenol A epoxy resin and a large excess of polyamine) can be used. For more flexible coatings, a reaction product of a long chain dibasic acid and a

polyamine, such as diethylene triamine, can be used as the polyfunctional amine.

Isocyanates can also be used as ingredient β) cross-linking agents for hydroxyl-functional resins. Suitable isocyanates can be organic isocyanates having 2 or more reactive isocyanate groups per molecule, polyisocyanates or blocked polyisocyanates. Suitable organic isocyanates include aliphatic, cycloaliphatic and aromatic isocyanates. Aliphatic isocyanates are exemplified by diisocyanates such as trimethylene diisocyanate, hexamethylene diisocyanate, 1,2-propylene diisocyanate, 1,2-butylene diisocyanate, 2,3-butylene diisocyanate, 1,3-butylene diisocyanate, ethylidene diisocyanate, butyldiene isocyanate, 4,4'-bis(isocyanate hexyl)methane, bis(2-isocyanate-ethyl)-fumarate, 2,6-diisocyanate methyl caproate, 2,2,4-(2,4,4) -trimethylhexamethylene diisocyanate and dimer acid diisocyanates.

Cycloaliphatic isocyanates such as cycloaliphatic diisocyanates are exemplified by 1,3,-cyclopentane diisocyanate, 1,4-cyclopentane diisocyanate, 1,2-cyclopentane diisocyanate and methylcyclohexyl diisocyanate.

Aromatic isocyanates such as aromatic diisocyanates are exemplified by m-phenylene diisocyanate, p-phenylene diisocyanate and 4,4'-diphenyl diisocyanate. Aliphatic/aromatic diisocyanates such as 4,4'-diphenylene methane diisocyanate, 2,4- or 2,6-tolylene diisocyanate, 4,4'-toluidene diisocyanate and 1,4-xylylene diisocyanate can also be used.

Polyisocyanates as cross-linking agents are preferred for use in automotive clear top coat applications. Preferably, the polyisocyanates are organic polyisocyanates such as aliphatic polyisocyanates and cycloaliphatic polyisocyanates. Particularly preferred are polyisocyanates selected from trimerized products of aliphatic diisocyanates such as 1,6-hexamethylene diisocyanate and high molecular weight biurets of 1,6-hexamethylene diisocyanate. The high molecular weight biurets of 1,6-hexamethlene diisocyanate are sold by Bayer under the trademarks DESMODUR® N and DESMODUR® L-2291. A particularly preferred aliphatic polyisocyanate is DESMODUR® N3390, available from Bayer, Pittsburgh, Pennsylvania.

In most organic coating compositions, ingredient δ), a solvent, is used to adjust the viscosity to a level suitable for the application process. Typically, organic coating composition viscosity is 50 to 1,000 mPa • s. Suitable solvents are those that can dissolve the resins in the organic coating composition. For resins that are soluble in esters and ketones, costs can be decreased by using mixtures of esters or ketones with hydrocarbons or alcohols to replace part of the esters and ketones.

Suitable one part organic coating compositions for component II) are exemplified by acrylic/melamine. polyester/melamine, acryl-polyester/melamine, acrylic/blocked isocyanate, polyester-acrylic/blocked isocyanate, polyester/blocked isocyanate, acrylic-epoxy/acid and acrylic-epoxy/anhydride coating compositions. Suitable multiple part organic coating compositions for component II) include two part organic coating compositions exemplified by acrylic/isocyanate, polyester/isocyanate, acrylic-polyester/isocyanate; acrylicepoxy/acid/isocyanate and acrylic-epoxy/anhydride/isocyanate coating compositions. One skilled in the art would know how to select an organic coating for component II) based on the disclosure above.

The thermosetting coating composition comprising components I) and II) can be formulated as a one part or as a multiple part composition. The thermosetting coating composition comprises a blend of components I) and II).

Preferably, the thermosetting coating composition comprises 25 to 99 weight percent of component I) and 1 to 75 weight percent of component II) based on the total amount of I) and II). More preferably, the thermosetting coating composition comprises 35 to 95 weight percent of component I) and 5 to 65 weight percent of component II). Most preferably, the thermosetting coating composition comprises 50 to 75 weight percent of component I) and 25 to 50 weight percent of component II).

This invention further relates to a method for preparing a silicone acrylate coating composition by blending components A), B), and C) (forming together component I) and optionally component II). In one embodiment, the method comprises blending components A), B i), B ii), B iii) and C, described above to obtain component I). This blending may be either performed by mixing components i) the organometallic compound, ii) the alkoxysilane, iii) the predetermined quantity of water, and optionally iv) the siloxane polymerization catalyst, thereby initiating co-hydrolysis and co-condensation of ingredients i) and ii) and forming component B), and thereafter blending component B) with components A) and C). Alternatively component I) that may be the sole component of the coating composition is prepared by forming component B) in presence of component A) and than blending with component C).

The alkoxy groups associated with i) the alkoxy-functional organometallic compound and ii) the alkoxysilane will undergo a hydrolysis reaction in the presence of water. In the hydrolysis reaction, water reacts at the alkoxy (OR) site, leaving a hydroxyl group (OH) and forming an alcohol of formula HOR. Thus, one mole of water reacts with one mole of alkoxy groups, leaving one mole of hydroxyl groups. Certain of the alkoxy sites are more amenable to hydrolysis than others. Thus, the hydrolysis reaction generally reaches equilibrium well before all alkoxy sites have been hydrolyzed.

In the absence of iv), the siloxane polymerization catalyst, the hydrolyzed organometallic compounds and hydrolyzed silanes are fairly stable and any condensation that takes place is minimal; except as noted above, when utilizing alkoxyfunctional aminosilanes to form ingredient ii). However, in the presence of iv) the siloxane polymerization catalyst, both the hydrolysis and condensation reactions are driven forward. Because hydrolysis and condensation take

place simultaneously, the equilibrium reached is dependent on both reactions.

In the condensation reaction, two hydroxyl groups react to yield a single molecule of water and establish a crosslinking oxygen bond. The water liberated though condensation is then available to carry out further hydrolysis. In a manner analogous to the hydrolysis of alkoxy groups, certain of the hydroxyl sites are more amenable to condensation than others. Thus, the condensation reaction generally reaches equilibrium well before all hydrolyzed sites have been condensed.

However, the hydrolysis reaction requires two molecules of water to hydrolyze two alkoxy groups, and the condensation reaction between two hydroxyl groups yields a single water molecule. Therefore, theoretically, the water will eventually be consumed, unless present in an amount that exceeds that amount required to hydrolyze all the hydrolyzable alkoxy sites. When not present in excess, the amount of water added to the reaction determines the degree of crosslinking that occurs between ingredient i) and ingredient ii).

However, adding too much water to this composition can cause two undesirable outcomes: formation of a precipitate, or gelling of the composition. Separation of the composition into two phases has also been observed but is believed to be a manifestation of precipitation. It is theorized that as the hydrolysis and condensation reactions proceed, the crosslinking of ingredient i) and ingredient ii) results in the formation of a sol having a multitude of resin network nuclei dispersed throughout. It is further theorized that if too much water is present, the resin network nuclei either grow large enough to precipitate from solution, or grow numerous and large enough to allow condensation therebetween, resulting in gel formation. The undesirability of making a gelled composition is self-evident, especially if the composition is to be used for forming an abrasion-resistant coating. When precipitation occurs, the composition loses its abrasion-resistant properties.

Preferably, ingredient i) and ingredient ii), are blended with component A) the multifunctional acrylate. Thereafter, ingredient iv) the siloxane polymerization catalyst and ingredient iii) the predetermined amount of water are added to the mixture. Thus, component B) the reaction product forms in the presence of A) the multifunctional acrylate. If a low viscosity multifunctional acrylate is used as component A), ingredient i) and ingredient ii) are frequently found to be soluble therein, and there is no need to use additional organic solvents.

Ingredient i) the alkoxy-functional organometallic compound and ingredient ii) the alkoxysilane undergo cohydrolysis and co-condensation. Combining ingredient iii) the predetermined amount of water and ingredient iv) the siloxane polymerization catalyst, with ingredient i) the alkoxy-functional organometallic compound or ingredient ii) the alkoxysilane, independently, yields a product that, when cured, exhibits substantially reduced abrasion-resistant properties. It is theorized that the co-condensation of the hydrolyzed alkoxy- functional organometallic compound and hydrolyzed alkoxysilane produces a resin network that has a more homogeneous chemical structure, both before and after curing.

This invention further relates to a method for coating a substrate with a silicone acrylate coating. The method comprises applying the silicone acrylate coating composition described above to a substrate and then curing the silicone acrylate coating composition to form a silicone acrylate coating on the substrate.

The silicone acrylate coating composition can be applied to a wide variety of substrates. Suitable substrates include wood, plastics such as vinyl and ABS, cellulosic substrates such as wood and paper, vitreous substrates such as ceramics, and stone substrates such as marble and granite. In general, any substrate that can withstand exposure to the solvents in the thermosetting coating composition and the temperatures required to cure the thermosetting coating composition can be used. The silicone acrylate coating composition can also be applied to synthetic polymers including coatings such as CORIAN™, FORMICA™, polyesters, acrylic-polyesters, polyurethanes, epoxies and alkyds and to metals such as steel, copper, brass and gold.

The method for applying the silicone acrylate coating composition is not critical and can be done by conventional means. For example, the silicone acrylate coating composition can be applied to the substrate by a method selected from brushing, flowing, spraying, roll coating, curtain coating, dip coating and spin coating. A coating thickness of 5 to 60 micrometers, and preferably 25 to 45 micrometers, is generally recommended for applications calling for abrasion resistance.

If the silicone acrylate coating composition contains any solvents, the solvents may be removed during or after curing. Preferably, the solvent is removed by allowing the coated substrate to sit at ambient temperature until some of the solvent evaporates or by subjecting the coated substrate to mild heating at a temperature less than the boiling point of the solvent.

The silicone acrylate coating composition is cured by heating. The exact temperature at which the silicone acrylate coating composition is cured depends on the type of coating composition and the half life of the peroxide therein at the temperature required to initiate curing. Typically the temperature is 100 to 175°C. Preferably, the curing temperature is 121 to 140°C, especially when component C) in the silicone acrylate coating composition is benzoyl peroxide.

The silicone acrylate coating can be used in various applications. For example, the coating can be used as a top clear coat or color coat for automotive applications. The silicone acrylate coating can also be used on flooring,

furniture; decorative fixtures such as plates, faucets and door handles; and as a general protective coating. The thermosetting coating composition comprising components I) and II) is particularly suited as a clear top coating used to protect the finish on vehicles.

These examples are intended to illustrate the invention to those skilled in the art.

Reference Example 1 - Sample Preparation

1. The following ingredients were combined in the order below and mixed for 60 minutes. Alcohols were then stripped out of the resulting solution.

A) 71.8 weight parts pentaerythritol tetraacrylate,
B i) 13.2 weight parts tetraethyl orthosilicate,
B ii) 7.75 weight parts 3-methacryloxypropyl-trimethoxysilane,
B iv) 5.18 weight parts acrylic acid,
B iii) 2.13 weight parts water and
0.004 weight parts phenothiazine.

2. Component C) was added to the product of step 1. Component C) contained the peroxide and solvents, if any.

Reference Example 2 - Method for the Preparation of Coating Samples Containing the Organic Coating Composition II)

Samples of thermosetting coating compositions were prepared by the following method:

1. Mix the peroxide with the solvent or solvents until the peroxide dissolves, thereby forming component C).
2. Add α) the resin of II) the organic coating composition and components A) and B). Components A) and B) were prepared by combining the following ingredients in the order below and mixing for 60 minutes:

A) 71.8 weight parts pentaerythritol tetraacrylate; and
B) i) 13.2 weight parts tetraethylortho-silicate.
B) ii) 7.75 weight parts 3-methacryloxypropyl-trimethoxysilane,
B) iv) 5.18 weight parts acrylic acid,
B) iii) 2.13 weight parts water and
0.004 weight parts phenothiazine. Alcohols were then stripped out of the resulting solution.

3. Add ingredient β) the cross-linking agent of component II) the organic coating composition and stir until thoroughly mixed. Wait at least 10 minutes before coating.
4. Add ingredient γ) the acid catalyst of component II) the organic coating composition, if any.
5. Using an isopropanol soaked KIMWIPE™, pre-clean steel panels (10.16 x 15.24 cm) coated with an automotive elctrocoat primer, primer and black base coat. Using the 6 mil gap of a draw down square coat 2 panels with each formulation.
6. Wait at least 10 minutes and cure at 121°C. for 30 minutes.

Reference Example 3 - Mar Resistance

Mar resistance was determined using the Atlas Crock Meter to measure the 20° gloss before and after 10 double rubs with a felt pad and a dry cleanser (BON AMI®) of each coating coated on a one-part automotive polyester-melamine black base coated steel panel (purchased from ACT, Hillsdale, MI). After a panel was rubbed, it was rinsed with water and blotted dry. Results are expressed in terms of % of Gloss Retention. It is preferred to have Gloss Retention be at least 75%. If Gloss Retention was less than 75%, chemical resistance was not measured.

Reference Example 4 - Chemical Resistance

Chemical resistance was measured by performing covered spot tests. To each phosphate treated steel panel (B1000 from Q-Panel, Cleveland, Ohio), a couple of drops of each test solution were applied and covered with a watch glass. After an hour, the watch glass was removed, and the test solution rinsed with deionized water. The panel was inspected for film degradation, delamination (loss of adhesion), spotting, staining, wrinkling, etc. The process was

repeated every hour for up to 24 hours. The coating failed when the film either delaminated or degraded. The test solutions used were:

Solution A a mineral acid blend having a pH of 1 (1:1:1 of 0.3N $HCl:H_2SO_4:HNO_3$), Solution B 10% Acetic Acid, Solution C 10% NaOH, and Solution D betadine, Solution E: 93 wt% of a 90wt% solution of formic acid, 2 wt% honey and 5 wt% tannic acid.

Example 1

A coating composition was prepared according to the method of Reference Example 1. The peroxide was benzoyl peroxide. The formulation of the coating composition is in Table 1.

The coating composition was coated on 4 steel panels coated with a one-part automotive polyester-melamine black base (purchased from ACT, Hillsdale, MI) using a draw down bar. The coated panels, samples 1-1, 1-2, 1-3 and 1-4, were allowed to sit at ambient laboratory conditions for 10 minutes prior to curing at 121°C. for 30 minutes or 140°C. for 30 minutes. The resulting cured films were 5-10 micrometers thick.

Table 2 shows the sample, film thickness, curing temperature and Gloss Retention, as measured according to Reference Example 3.

Example 2

A coating composition was prepared according to the method of Reference Example 1. The peroxide was benzoyl peroxide. The formulation of the coating composition is in Table 1.

The coating composition was applied to 4 phosphate treated steel panels (B1000 from Q-Panel, Cleveland, Ohio) using a 2 mil draw down bar. The coated panels were allowed to sit at ambient laboratory conditions for 10 minutes prior to curing at 140°C. for 30 minutes. The coated panels were then analyzed for chemical resistance by the method of Reference Example 4. Sample 2-1 was exposed to Solution A, sample 2-2 was exposed to Solution B, sample 2-3 was exposed to Solution C, and sample 2-4 was exposed to solution D.

Examples 1 and 2 show that diacyl peroxides can be used to render the coating composition of this invention heat curable.

Table 1

| Formulations of Coating Compositions | | |
|---|---|---|
| Component | Wt Parts of Each Component | |
| | Example 1 | Example 2 |
| | | |
| A) + B) | 25 | 25 |
| Peroxide | 1.25 | 1.25 |
| Methyl n-Amyl Ketone | 10 | 5 |
| Xylene | 0 | 5 |
| n-Butanol | 0 | 5 |
| Mineral Spirits | 0 | 0 |

Table 2

| Mar Resistance | | | | |
|---|---|---|---|---|
| Ex | Spl | Film Thickness (micrometers) | Cure Temperature (°C) | Gloss Retention (%) |
| 1 | 1-1 | 7.5 | 121 | 87 |
| | 1-2 | 5 | 140 | 89 |
| | 1-3 | 10 | 121 | 78 |
| | 1-4 | 5 | 140 | 97 |

Table 3

| Chemical Resistance | | | | |
|---|---|---|---|---|
| | A Mineral Acid | B Acetic Acid | C NaOH | D Betadine |
| Sample | 2-1 | 2-2 | 2-3 | 2-4 |
| Hours to Fail | > 24 | 15 | 16 | > 24 |

Example 3

A coating composition was prepared according to the method of Reference Example 1. The peroxide was LUPERSOL® 225M60 (60%NV), di(sec-butyl)peroxydicarbonate. The formulation of the coating composition is in Table 4.

Samples were prepared by applying the coating composition to phosphate treated steel panels (B1000 from Q-Panel, Cleveland, Ohio) and to one-part automotive polyester-melamine black base coated steel panels (purchased from ACT, Hillsdale, MI) using a 2 mil draw down bar. The coated panels were allowed to sit at ambient laboratory conditions for 10 minutes prior to curing.

Sample 3-1 was cured by heating to 121°C. for 30 minutes. Sample 3-2 was cured at 140°C. for 30 minutes. The coating was 7.5 to 10 micrometers thick on each coated panel. The coated panels were then analyzed for mar resistance by the method of Reference Example 2 and chemical resistance by the method of Reference Example 3. Mar resistance results are presented in Table 5. Chemical resistance results are presented in Table 6.

Example 4

A coating composition was prepared according to the method of Reference Example 1. The peroxide was LUPERSOL® 225M60 (60%NV), di(sec-butyl)peroxydicarbonate. The formulation of the coating composition is in Table 4.

The coating composition was applied to phosphate treated steel panels and to one-part automotive polyester-melamine black base coated steel panels as described in Example 3.

Sample 4-1 was cured by heating to 100°C. for 30 minutes. Sample 4-2 was cured by heating to 121°C. for 30 minutes. Sample 4-3 was cured by heating to 140°C. for 30 minutes. The coating was 7.5 to 10 micrometers thick for each coated panel. The coated panels were then analyzed for mar resistance by the method of Reference Example 3 and chemical resistance by the method of Reference Example 4. Mar resistance results are presented in Table 5. Chemical resistance results are presented in Table 6.

Example 5

A coating composition was prepared according to the method of Reference Example 1. The peroxide was LUPERSOL® 225M60 (60%NV), di(sec-butyl)peroxydicarbonate. The formulation of the coating composition is in Table 4.

Samples were prepared by applying the coating composition to phosphate treated steel panels and to one-part automotive polyester-melamine black base coated steel panels as described in Example 3.

Sample 5-1 was cured by heating to 100°C. for 30 minutes. Sample 5-2 was cured by heating to 121°C. for 30 minutes. The coating was 7.5 to 10 micrometers thick for each coated panel. The coated panels were then analyzed for mar resistance by the method of Reference Example 3 and chemical resistance by the method of Reference Example 4. Mar resistance results are presented in Table 5. Chemical resistance results are presented in Table 6.

Table 4

| Formulations of Coating Compositions | | | |
|---|---|---|---|
| Component | Wt Parts of Each Component | | |
| | Example 3 | Example 4 | Example 5 |
| | | | |
| A) + B) | 10 | 10 | 10 |
| Peroxide | 0.83 | 1.67 | 0.67 |
| Methyl n-Amyl Ketone | 3.5 | 3.5 | 3.5 |

Table 5

| Mar Resistance | | | | |
|---|---|---|---|---|
| Ex | Spl | Film Thickness (μm) | Cure Temperature(°C) | Gloss Retention (%) |
| 3 | 3-1 | 7.5-10 | 121 | 38 |
| | 3-2 | 7.5-10 | 140 | 98 |
| 4 | 4-1 | 7.5-10 | 100 | 22 |
| | 4-2 | 7.5-10 | 121 | 89 |
| | 4-3 | 7.5-10 | 140 | 99 |
| 5 | 5-1 | 7.5-10 | 100 | did not cure |
| | 5-2 | 7.5-10 | 121 | 11 |

Table 6

| Chemical Resistance | | | | |
|---|---|---|---|---|
| Hours to Fail after Exposure to Each | A Mineral Acid | B Acetic Acid | C NaOH | D Betadine |
| Sample 3-1 | NA | NA | NA | NA |
| Sample 3-2 | > 24 | 13 | 2 | > 24 |
| Sample 4-1 | NA | NA | NA | NA |
| Sample 4-2 | > 24 | 11 | 2 | > 24 |
| Sample 4-3 | > 24 | 16 | 2 | > 24 |
| Sample 5-2 | NA | NA | NA | NA |

NA means not applicable; the chemical resistance was not tested on the sample.

Example 6

A coating composition was prepared according to the method of Reference Example 1. The peroxide was benzoyl peroxide. The formulation of the coating composition is in Table 7.
The coating composition was applied to phosphate treated steel panels and to one-part automotive polyester-melamine black base coated steel panels as described in Example 3.
Sample 6 was cured by heating a coated steel panel to 140°C. for 30 minutes. The coating was 7.5 to 10 micrometers thick. The coated panel was then analyzed for mar resistance by the method of Reference Example 3 and chemical resistance by the method of Reference Example 4. Mar resistance results are presented in Table 8. Chemical resistance results are presented in Table 9.

Example 7

A coating composition was prepared according to the method of Reference Example 1. The peroxide was LUPERSOL® 225M60 (60% NV), di(sec-butyl)peroxydi-carbonate. The formulation of the coating composition is in Table 7.
The coating composition was applied to phosphate treated steel panels and to one-part automotive polyester-melamine black base coated steel panels as described in Example 3.
Sample 7 was cured by heating to 140°C. for 30 minutes. The coating was 7.5 to 10 micrometers thick. The coated panel was then analyzed for mar resistance by the method of Reference Example 3 and chemical resistance by the method of Reference Example 4. Mar resistance results are presented in Table 8. Chemical resistance results are presented in Table 9.
Example 7 shows that peroxydicarbonates, such as di(secbutyl)peroxydicarbonate, can be used in coating compositions to produce coatings with good mar and chemical resistance.

Example 8

A coating composition was prepared according to the method of Reference Example 1. The peroxide was benzoyl peroxide. The formulation of the coating composition is in Table 7.
The coating composition was applied to phosphate treated steel panels and to one-part automotive polyester-melamine black base coated steel panels as described in Example 3.
Sample 8 was cured by heating to 121°C. for 30 minutes. The coating was 7.5 to 10 micrometers thick. The coated panel was then analyzed for mar resistance by the method of Reference Example 3 and chemical resistance by the method of Reference Example 4. Mar resistance results are presented in Table 8.

Example 9

A coating composition was prepared according to the method of Reference Example 1. The peroxide was LUPERSOL® 225M60 (60% NV), di(sec-butyl) peroxydi-carbonate. The formulation of the coating composition is in Table 7.
The coating composition was applied to phosphate treated steel panels and to one-part automotive polyester-melamine black base coated steel panels as described in Example 3.
Sample 9 was cured by heating to 121°C. for 30 minutes. The coating was 7.5 to 10 micrometers thick. The coated panel was then analyzed for mar resistance by the method of Reference Example 3 and chemical resistance by the method of Reference Example 4. Mar resistance results are presented in Table 8.

Table 7

| Formulations of Coating Compositions | | | | |
|---|---|---|---|---|
| Component | Wt Parts of Each Component | | | |
| | Example 6 | Example 7 | Example 8 | Example 9 |
| | | | | |
| A) + B) | 16 | 10 | 10 | 10 |
| Peroxide | 0.16 | 0.16 | 0.25 | 0.42 |
| Methyl n-Amyl Ketone | 3 | 2 | 4 | 3 |

Table 8

| Mar Resistance | | | |
|---|---|---|---|
| Example | Film Thickness (micrometers) | Cure Temperature (°C) | Gloss Retention (%) |
| 6 | 7.5-10 | 140 | 96 |
| 7 | 7.5-10 | 140 | 85 |
| 8 | 7.5-10 | 121 | 80 |
| 9 | 7.5-10 | 121 | 22 |

Table 9

| Chemical Resistance | | | | |
|---|---|---|---|---|
| Hours to Fail after Exposure to Each | A Mineral Acid | B Acetic Acid | C NaOH | D Betadine |
| Sample 6 | > 24 | 14 | 3 | > 24 |
| Sample 7 | > 24 | 8 | 2 | > 24 |
| Sample 8 | NA | NA | NA | NA |
| Sample 9 | NA | NA | NA | NA |

NA means not applicable; the chemical resistance was not tested on the sample.

Example 10

A coating composition was prepared according to the method of Reference Example 1. The peroxide was benzoyl peroxide. The formulation of the coating composition is in Table 10.

The coating composition was applied to phosphate treated steel panels and to one-part automotive polyester-melamine black base coated steel panels as described in Example 3.

Sample 10 was cured by heating to 100°C. for 30 minutes. The coating was 7.5 to 10 micrometers thick. The coated panels were then analyzed for mar resistance by the method of Reference Example 3 and chemical resistance by the method of Reference Example 4. Mar resistance results are presented in Table 11. Chemical resistance results are presented in Table 12.

Example 11

A coating composition was prepared according to the method of Reference Example 1. The peroxide was benzoyl peroxide. The formulation of the coating composition is in Table 10.

The coating composition was applied to phosphate treated steel panels (B1000 from Q-Panel, Cleveland, Ohio) using a 2 mil draw down bar. The coated panels were allowed to sit at ambient laboratory conditions for 10 minutes prior to curing. Sample 11-1 was cured by heating at 90°C. for 30 minutes. Sample 11-2 was cured by heating at 100°C. for 30 minutes. Sample 11-3 was cured by heating to 140°C. for 30 minutes.

The coatings for examples 11-1, 1-2 and 11-3 were each 7.5 to 10 micrometers thick. The coated panels were then analyzed for mar resistance by the method of Reference Example 3 and chemical resistance by the method of Reference Example 4. Mar resistance results are presented in Table 11. Chemical resistance results are presented in Table 12.

Example 12

A coating composition was prepared according to the method of Reference Example 1. The peroxide was

benzoyl peroxide. The formulation of the coating composition is in Table 10.

The coating composition was applied to phosphate treated steel panels as described in Example 11.

Sample 12 was cured by heating to 140°C. for 30 minutes. The coating was 7.5 to 10 micrometers thick. The coated panels were then analyzed for mar resistance by the method of Reference Example 3 and chemical resistance by the method of Reference Example 4. Mar resistance results are presented in Table 11. Chemical resistance results are presented in Table 12.

Example 13

1. The following ingredients were combined and mixed for 60 minutes:

   A) 73.70 weight parts pentaerythritol tetraacrylate,
   B i) 10.24 weight parts tetraethyl orthosilicate, and
   B ii) 7.75 weight parts 3- (acryloxy)propyltriethoxysilane.

2. B iv) Acrylic acid (3.94 weight parts) was added to the product of step 1 and mixed for 60 minutes.
3. B iii) Water (4.36 weight parts) was added to the product of step 2 and mixed for 60 minutes.
4. 0.004 weight parts (thiophenediyl)bis(t-butylbenzoxazole) was added to the product of step 3 mixed for 60 minutes.
5. Component C) was added to the product of step 1. Component C) contained the peroxide and solvent.

Example 13 shows that different alkoxysilanes can be used as ingredient B ii).

Table 10

| Formulations of Coating Compositions | | | | |
|---|---|---|---|---|
| Component | Wt Parts of Each Component | | | |
| | Example 10 | Example 11 | Example 12 | Example 13 |
| A) + B) | 10 | 10 | 5 | 5 |
| Peroxide | 0.5 | 1 | 0.025 | 0.25 |
| Methyl n-Amyl Ketone | 5 | 8 | 3 | 5 |

Table 11

| Mar Resistance | | | | |
|---|---|---|---|---|
| Ex | Spl | Film Thickness (micrometers) | Cure Temperature (°C) | Gloss Retention (%) |
| 10 | 10 | 7.5-10 | 100 | 19 |
| 11 | 11-1 | 7.5-10 | 90 | 39 |
| | 11-2 | 7.5-10 | 100 | 82 |
| | 11-3 | 7.5-10 | 140 | 98 |
| 12 | 12 | 7.5-10 | 140 | 78 |
| Example 13 | | 7.5-10 | 140 | 89 |

Table 12

| Chemical Resistance | | | | |
|---|---|---|---|---|
| Hours to Fail after Exposure to Each | A Mineral Acid | B Acetic Acid | C NaOH | D Betadine |
| Sample 10 | NA | NA | NA | NA |
| Sample 11-1 | NA | NA | NA | NA |
| Sample 11-2 | > 24 | 8 | 2 | > 24 |
| Sample 11-3 | > 24 | 15 | 15 | > 24 |
| Sample 12 | > 24 | 9 | 1 | > 24 |
| Sample 13 | 1 | 1 | 1 | 1 |

Example 14

Samples 14-1, 14-2 and 14-3 were prepared by the method of Reference Example 2.

Component C) contained 1 weight part methyl isobutyl ketone, 1 weight part methyl amyl ketone, 1 weight part xylene and benzoyl peroxide. Component II) contained ingredient α) DESMOPHEN® A365, an acrylic polyol and ingredient β) DESMODUR® N3390, an aliphatic polyisocyanate. No ingredient γ) acid catalyst was used. The formulations of the samples are in Table 13. Each sample was tested for coating performance according to Reference Examples 3 and 4. The results are in Table 14.

Comparative Example 1

Sample C1 was prepared by the method in Reference Example 1 using the same components as Example 1, except components A) and B) and the benzoyl peroxide were omitted. The formulation is in Table 13. Sample C1 was tested for coating performance according to Reference Examples 3 and 4. The results are in Table 14.

Example 15

Samples 15-1, 15-2 and 15-3 were prepared according to the method in Reference Example 2.

Component C) contained 2.1 weight parts methyl ethyl ketone, 2.1 weight parts n-butanol and benzoyl peroxide.

Component II) contained ingredient α) JONCRYL® 500, an acrylic polyol, ingredient β) CYMEL® 303, hexamethoxymethylmelamine and ingredient γ) CYCAT® 4040, p-toluene sulfonic acid.

The formulations of each sample are in Table 13. Each sample was tested for coating performance according to Reference Examples 3 and 4. The results are in Table 14.

Comparative Example 2

Sample C2 was prepared by the method in Reference Example 2 using the same components as in Example 2, except that components A) and B) and the benzoyl peroxide were omitted. The formulation of sample C2 is in Table I. Sample C2 was tested for coating performance according to Reference Example 3 and 4. The results are in Table 14.

Examples 14 and 15 and Comparative Examples 1 and 2 show that marginal improvement in etch resistance when the coating is exposed to Solution B can be obtained by the formulations 14-2, 14-3, 15-1, 15-2 and 15-3, as compared to samples C1 and C2. Mar resistance is significantly improved (a 10% increase in gloss retention) for sample 1-3.

Table 13

| Formulations for Examples 14 and 15 and Comparative Examples 1 and 2 | | | | | | | | | |
|---|---|---|---|---|---|---|---|---|---|
| Sample | | 14-1 | 14-2 | 14-3 | C1 | 15-1 | 15-2 | 15-3 | C2 |
| Component I | A + B | 2 | 4 | 6 | 0 | 1.77 | 3.53 | 5.3 | 0 |
| | C | 3.1 | 3.2 | 3.3 | 3.0 | 4.29 | 4.38 | 4.47 | 4.2 |
| | wt parts peroxide in C | 0.1 | 0.2 | 0.3 | 0 | 0.09 | 0.18 | 0.27 | 0 |
| Component II | α | 20 | 20 | 20 | 20 | 15.47 | 15.47 | 15.47 | 15.47 |
| | β | 7.8 | 7.8 | 7.8 | 7.8 | 5.4 | 5.4 | 5.4 | 5.4 |

Table 14

| Test Results for Examples 14 and 15 and Comparative Examples 1 and 2 | | | | | | | | |
|---|---|---|---|---|---|---|---|---|
| Sample | 14-1 | 14-2 | 14-3 | C6 | 15-1 | 15-2 | 15-3 | C2 |
| Gloss Retention (%) | 15 | 26 | 30 | 19 | 53 | 45 | 40 | 44 |
| Solution A Hrs to failure | > 24 | > 24 | > 24 | > 24 | > 24 | > 24 | > 24 | > 24 |
| Solution E Hrs to failure | 2 | 3 | 3 | 2 | 2 | 2 | 2 | 1 |

Reference Example 5

Samples of thermosetting coating compositions were prepared by the following method:

1. Mix the peroxide with the solvent or solvents until the peroxide dissolves, thereby forming component C).
2. Add ingredient α), the resin of component II), component A) the multifunctional acrylate and component B). Components A) and B) were prepared by combining the following ingredients in the order below and mixing for 60 minutes:

   A) 71.8 weight parts pentaerythritol tetraacrylate; and
   B) i) 13.2 weight parts tetraethyl orthosilicate,
   B) ii) 7.75 weight parts 3-methacryloxypropyl-trimethoxysilane,
   B) iv) 5.18 weight parts acrylic acid,
   B) iii) 2.13 weight parts water, and
   0.004 weight parts phenothiazine.

   Alcohols were then stripped out of the resulting solution. Ingredient α) and components A) and B) are then stirred until thoroughly mixed.
3. Add ingredient β) the cross-linking agent of component II) the organic coating composition and stir until thoroughly mixed.
4. Add ingredient γ) the catalyst of component II), if any. Wait at least 10 minutes before coating.
5. Using an isopropanol soaked KIMWIPE™, pre-clean steel panels (10.16 x 15.24 cm) coated with an automotive elctrocoat primer, primer and black base coat. Using the 6 mil gap of a draw down square coat 2 panels with each formulation.
6. Wait at least 10 minutes and cure at 140°C. for 30 minutes.

Example 16

Samples 16-1, 16-2 and 16-3 were prepared by the method of Reference Example 5. Components A), B), C) and component II) were the same as in Example 15. The formulations of each sample are shown in Table 15. The

samples were tested for coating performance according to Reference Examples 3 and 4. The results are in Table 16.

Comparative Example 3

Sample C3 was prepared by the method of Reference Example 5. Components A), B), C) and component II) were the same as in Comparative Example 2. The formulation for sample C3 is shown in Table 15. Sample C3 was tested for coating performance according to Reference Examples 3 and 4. The results are in Table 16.

Example 17

Samples 17-1, 17-2 and 17-3 were prepared by the method in Reference Example 5. Components A), B), C) and component II) were the same as in Example 14. The formulations of each sample are shown in Table 15. The samples were tested for coating performance according to Reference Examples 3 and 4. The results are in Table 16.

Comparative Example 4

Sample C4 was prepared by the method of Reference Example 5. Components A), B), C) and component II) were the same as in Comparative Example 1. The formulation for sample C9 is shown in Table 15. Sample C4 was tested for coating performance according to Reference Examples 3 and 4. The results are in Table 16.

Examples 16 and 17 have higher levels of benzoyl peroxide in component C) and are cured at a higher temperature than Examples 14 and 15. Comparative Examples 3 and 4 contain no benzoyl peroxide, but they are also cured at the higher temperature. The mar resistance of the Comparative Examples 3 and 4 increased, as compared to Comparative Examples 1 and 2, when the cure temperature was increased. The 10% increase in gloss retention was no longer observed in Sample 16-3, as compared to Sample 15-3. The etch resistance increased for Comparative Sample C4 (one component acrylic/melamine) and also for samples 16-3, 17-2 and 17-3 discussed below.

Table 15

| Formulations for Examples 16 and 17 and Comparative Examples 3 and 4 | | | | | | | | | |
|---|---|---|---|---|---|---|---|---|---|
| Sample | | 16-1 | 16-2 | 16-3 | C3 | 17-1 | 17-2 | 17-3 | C4 |
| Component I | A + B | 1.77 | 3.53 | 5.3 | 0 | 2 | 4 | 6 | 0 |
| | C | 4.38 | 4.55 | 4.73 | 4.2 | 3.2 | 3.4 | 3.6 | 3.0 |
| | Wt parts peroxide in C | 0.18 | 0.35 | 0.53 | 0 | 0.2 | 0.4 | 0.6 | 0 |
| Component II | $\alpha$ | 15.47 | 15.47 | 15.47 | 15.47 | 20 | 20 | 20 | 20 |
| | $\beta$ | 5.4 | 5.4 | 5.4 | 5.4 | 7.8 | 7.8 | 7.8 | 7.8 |

Table 16

| Test Results for Examples 16 and 17 and Comparative Examples 4 and 5 | | | | | | | | |
|---|---|---|---|---|---|---|---|---|
| Sample | 16-1 | 16-2 | 16-3 | C8 | 17-1 | 17-2 | 17-3 | C9 |
| Gloss Retention (%) | 23 | 19 | 30 | 30 | 60 | 47 | 58 | 58 |
| Solution A Hrs to failure | > 24 | > 24 | > 24 | > 24 | > 24 | > 24 | > 24 | > 24 |
| Solution E Hrs to failure | 2 | 3 | 4 | 2 | 2 | 3 | 3 | 2 |

Example 18

Samples 18-1, 18-2 and 18-3 were prepared according to the method in Reference Example 2. Samples 18-1, 18-2 and 18-3 had the same formulations of samples 16-1, 16-2 and 16-3, respectively. Samples 18-1, 18-2 and 18-3 were tested for coating performance according to Reference Examples 3 and 4. The results are in Table 17.

Comparative Example 5

Sample C5 was prepared according to the method in Reference Example 1. Sample C5 had the same formulation as Sample C3. Sample C5 was tested for coating performance according to Reference Examples 3 and 4. The results are in Table 17.

Example 19

Samples 19-1, 19-2 and 19-3 were prepared according to the method in Reference Example 2. Samples 19-1, 19-2 and 19-3 had the same formulations as samples 17-1, 17-2 and 17-3, respectively. Samples 19-1, 19-2 and 19-3 were tested for coating performance according to Reference Examples 3 and 4. The results are in Table 17.

Comparative Example 6

Sample C6 was prepared according to the method in Reference Example 2. Sample C6 had the same formulation as sample C4. Sample C6 was tested for coating performance according to Reference Examples 3 and 4. The results are in Table 17.

For Examples 18 and 19, the 10% improvement in gloss retention was observed for sample 19-1. The etch resistance remained the same, except for Sample 5-3, which showed a slight increase after exposure to Solution E.

Table 17

| Test Results for Examples 18 and 19 and Comparative Examples 5 and 6 | | | | | | | | |
|---|---|---|---|---|---|---|---|---|
| Sample | 18-1 | 18-2 | 18-3 | C10 | 19-1 | 19-2 | 19-3 | C11 |
| Gloss Retention (%) | 25 | 18 | 27 | 19 | 54 | 46 | 44 | 44 |
| Solution A Hrs to failure | > 24 | > 24 | > 24 | > 24 | > 24 | > 24 | > 24 | > 24 |
| Solution E Hrs to failure | 2 | 3 | 4 | 2 | 2 | 2 | 2 | 2 |

Reference Example 6

Samples of thermosetting coating compositions were prepared by the following method:

1. Mix the benzoyl peroxide with solvent or solvents until the peroxide dissolves, thereby forming component C).
2. Add components A) and B) and stir until thoroughly mixed. Components A) and B) were prepared by combining the following ingredients in the order below and mixing for 60 minutes:

    A) 71.8 weight parts pentaerythritol tetraacrylate; and
    B) i) 13.2 weight parts tetraethyl orthosilicate,
    B) ii) 7.75 weight parts 3-methacryloxypropyltrimethoxysilane.
    B) iv) 5.18 weight parts acrylic acid,
    B) iii) 2.13 weight parts water, and
    0.004 weight parts phenothiazine.

3. In a separate container, combine ingredient α) the resin with the mixture prepared in step 2 and stir until thoroughly mixed.
4. Add ingredient β) to the mixture from step 3 and stir until thoroughly mixed.
5. Add ingredient γ), the catalyst of component II), if any. Wait at least 10 minutes before coating.
6. Using an isopropanol soaked KIMWIPE™, pre-clean steel panels (10.16 x 15.24 cm) coated with an automotive elctrocoat primer, primer and black base coat. Using the 6 mil gap of a draw down square, coat 2 panels with each formulation.
7. Wait at least 10 minutes and cure at 140°C. for 30 minutes.

Example 20

Samples 20-1 and 20-2 were prepared according to the method in Reference Example 6. Components A),

B), C) and component II) are the same as in Example 16. The formulations of each sample are in Tables 18 and 19. Samples 20-1 and 20-2 were tested for coating performance according to Reference Example 3 and 4. The results are in Table 20 with the results of sample C3 from Comparative Example 3 as a comparison.

Example 20 shows that significant improvements in etch and mar resistance can be achieved by changing the order of addition when preparing the samples.

Table 18

| Formulation for Example 20 | | |
|---|---|---|
| Mixture Sample from Step 2 | | 20-1 and 20-2 |
| Component I | A + B | 25 |
| | C | 16.25 |
| | wt parts peroxide in C | 1.25 |

Table 19

| Formulation for Example 20 | | |
|---|---|---|
| | 20-1 | 20-2 |
| α | 2.5 | 1.45 |
| Mixture Sample from Step 2 | 4.7 | 8.2 |
| β | 0.87 | 0.51 |
| γ | 1 drop | 1 drop |

Table 20

| Test Results for Example 20 Compared with Comparative Example 3 | | | |
|---|---|---|---|
| Sample | 20-1 | 20-2 | C3 |
| Gloss Retention (%) | 73 | 84 | 58 |
| Solution A Hrs to failure | > 24 | > 24 | > 24 |
| Solution E Hrs to failure | 10 | > 24 | 2 |

<u>Example 21</u>

Samples 21-1, 21-2, 21-3 and 21-4 were prepared by the method of Reference Example 6. Components A), B) and component II) were the same as in Example 14. Component C) was benzoyl peroxide dissolved in methyl amyl ketone. The formulations for samples 21-1 to 21-4 are in Tables 21 and 22. The samples were tested for coating performance according to Reference Examples 3 and 4. The results are in Table 23, presented with the results from Comparative Example 4, sample C4, for comparison.

Example 21 shows that significant improvements in both etch and mar resistance were observed in samples 21-1, 21-2 and 21-4. Marginal improvement in etch and mar resistance were observed for sample 21-3.

Table 21

| Formulations for Example 21 | | |
|---|---|---|
| Mixture Sample from Step 2 | | 21-1 to 21-4 |
| Component I | A + B | 68.9 |
| | C | 16.25 |
| | wt parts peroxide in C | 1.25 |

Table 22

| Formulations for Example 21 | | | | |
|---|---|---|---|---|
| | 21-1 | 21-2 | 21-3 | 21-4 |
| α | 5 | 5 | 5 | 2.5 |
| Mixture Sample from Step 2 | 6.9 | 4.6 | 2.96 | 10.36 |
| β | 1.95 | 1.95 | 1.95 | 0.98 |
| γ | 0 | 0 | 0 | 0 |

Table 23

| Test Results for Example 21 Compared with Comparative Example 4 | | | | | |
|---|---|---|---|---|---|
| Sample | 21-1 | 21-2 | 21-3 | 21-4 | C4 |
| Gloss Retention (%) | 43 | 40 | 36 | 86 | 30 |
| Solution A Hrs to failure | > 24 | > 24 | > 24 | > 24 | > 24 |
| Solution B Hrs to failure | > 24 | 10 | 4 | > 24 | 2 |

Example 22

Samples 22-1 and 22-2 were prepared by the method of Reference Example 6. Components A), B) and component II) were the same as in Example 16. Component C) was benzoyl peroxide dissolved in methyl amyl ketone. The formulations for samples 22-1 and 22-2 are in Tables 24 and 25. The samples were tested for coating performance according to Reference Examples 3 and 4. The results are in Table 26, presented with the results of sample C3 from Comparative Example 3.

Example 22 shows that significant improvements in both etch and mar resistance were observed in sample 22-2. Marginal improvement in etch and mar resistance were observed for sample 22-1.

Table 24

| Formulations for Example 22 | | |
|---|---|---|
| Mixture Sample from Step 2 | | 22-1 and 22-2 |
| Component I | A + B | 68.9 |
| | C | 16.25 |
| | wt parts peroxide in C | 1.25 |

Table 25

| Formulations for Example 22 | | |
|---|---|---|
| | 22-1 | 22-2 |
| $\alpha$ | 3 | 6.125 |
| Mixture Sample from Step 2 | 3.16 | 4.13 |
| $\beta$ | 1.05 | 2.1 |
| $\gamma$ | 1 drop | 2 drops |

Table 26

| Test Results for Example 22 Compared with Comparative Example 3 | | | |
|---|---|---|---|
| Sample | 22-1 | 22-2 | C3 |
| Gloss Retention (%) | 71 | 63 | 58 |
| Solution A Hrs to failure | > 24 | > 9 | > 24 |
| Solution E Hrs to failure | 6 | 4 | 2 |

## Claims

**1.** A heat-curable coating composition containing

component I) comprising components A), B) and C); wherein

component A) is at least one multifunctional acrylate:
component B) is a product obtained by a method comprising co-hydrolyzing and co-condensing a composition comprising ingredients i), ii) and iii); wherein

ingredient i) is at least one alkoxy-functional organometallic compound having a formula $M(OR)_4$, wherein M is selected from Si and Ti and each OR is independently an alkoxy group;
ingredient ii) is at least one alkoxysilane having a formula

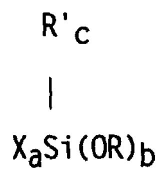

wherein each OR is as defined above, each X is independently a monovalent organic group that renders the alkoxysilane capable of copolymerization with A) the multifunctional acrylate and each R' is independently a monovalent hydrocarbon group; and a is 1, 2 or 3; b is 1, 2 or 3; c is 0, 1 or 2; and $a + b + c = 4$ ; and

ingredient iii) is a predetermined quantity of water sufficient to cause the co-hydrolysis and permit the co-condensation without gelling the composition or causing a precipitate to form therefrom; and

component C) comprises a catalytic quantity of a peroxide; and optionally

component II) comprising an organic coating composition.

**2.** The composition of claim 1 wherein component A) is selected from multifunctional acrylate monomers, multifunctional acrylate polymers and combinations thereof.

**3.** The composition of claim 2 wherein the multifunctional acrylate monomers are selected from diacrylates, triacrylates, tetraacrylates and pentaacrylates.

**4.** The composition of any of the preceding claims wherein the alkoxy groups in i) have from one to four carbon atoms.

**5.** The composition of any of the preceding claims wherein the monovalent organic group X in ii) comprises at least one unsaturated group selected from vinyl, hexenyl, methacryloxy, acryloxy, styryl and vinyl ether groups.

**6.** The composition of any of the preceding claims wherein the composition resulting in component B) further comprises ingredient iv) a siloxane polymerization catalyst selected from strong protonic acids, supported catalysts and basic siloxane polymerization catalysts.

**7.** The composition of any of the preceding claims wherein component C) comprises a peroxide elected from diacyl peroxides and peroxydicarbonates.

**8.** The composition of claim 7 wherein component C) further comprises a solvent selected from ketones, esters, alcohols and aromatic hydrocarbons.

**9.** The composition of any of the preceding claims wherein component II) is selected from one part organic coating compositions and multiple part organic coating compositions.

**10.** The composition of claim 9 wherein component II) comprises 40 to 95 weight percent of ingredient $\alpha$) a resin and 5 to 60 weight percent of ingredient $\beta$) a cross-linking agent based on the total weight of $\alpha$) and $\beta$).

**11.** The composition of claim 10 wherein ingredient $\alpha$) is selected from polyester resins and acrylic resins.

**12.** The composition of any of claims 10 or 11 wherein ingredient $\beta$) is selected from amino resins, epoxy resins and isocyanates.

**13.** The composition of claim 12 wherein ingredient $\beta$) is an amino resin and component II) further comprises ingredient $\gamma$) an acid catalyst selected from sulfonic acids and sulfonic acid salt derivatives.

**14.** The composition of any of the preceding claims wherein the composition comprises 25 to 99 weight percent of component I) and 1 to 75 weight percent of component II) based on the total weight of components I) and II).

**15.** A method for coating a substrate comprising:

(1) applying to a substrate, a silicone acrylate coating composition of any of claims 1-14 and
(2) curing the product of step 1).

**16.** A coated substrate obtainable by the method of claim 15.

**17.** A method for preparing a silicone acrylate coating composition comprising:
forming as component I) a blend comprising components A), B) and C), wherein components A), B) and C) are as defined in any of claims 1-8 and optionally blending component I) with component II) that is defined according to any of claims 9-13.

**18.** The method of claim 17 wherein component B) is formed by blending i) the organometallic compound, ii) the alkoxysilane, and iii) the predetermined quantity of water, thereby initiating co-hydrolysis and co-condensation of ingredients i) and ii) and forming component B), and thereafter blending component B) with components A) and C).

**19.** The method of claim 18 wherein iv) a siloxane polymerization catalyst is added while forming component B).

**20.** The method of claim 17 wherein component B) is obtained by a method comprising blending ingredients i) the alkoxy-functional organometallic compound and ii) the alkoxysilane with component A) to form a mixture, adding to the mixture ingredient iv) the siloxane polymerization catalyst, and thereafter adding ingredient iii) the predetermined quantity of water.

European Patent Office

# EUROPEAN SEARCH REPORT

Application Number
EP 00 10 8377

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X,Y | EP 0 730 015 A (DOW CORNING) 4 September 1996 (1996-09-04)<br>* page 3, line 19 - page 5, line 29 *<br>* page 5, line 38 - page 6, line 56 *<br>* examples 3-6 *<br>* claims 1-4,6-9 * | 1-8, 15-20 | C09D4/06<br>C08F283/12<br>C09D183/10 |
| Y | EP 0 469 613 A (DOW CORNING TORAY SILICONE) 5 February 1992 (1992-02-05)<br>* page 2, line 39 - page 3, line 48 *<br>* example 1 * | 1-8, 15-20 | |

TECHNICAL FIELDS SEARCHED (Int.Cl.7)
C09D
C08F

The present search report has been drawn up for all claims

| Place of search | Date of completion of the search | Examiner |
|---|---|---|
| THE HAGUE | 7 July 2000 | Bettels, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 00 10 8377

This annex lists the patent family members relating to the patent documents cited in the above-mentioned European search report. The members are as contained in the European Patent Office EDP file on
The European Patent Office is in no way liable for these particulars which are merely given for the purpose of information.

07-07-2000

| Patent document cited in search report | Publication date | Patent family member(s) | Publication date |
|---|---|---|---|
| EP 0730015 A | 04-09-1996 | AT 175711 T | 15-01-1999 |
| | | AU 698030 B | 22-10-1998 |
| | | AU 4572496 A | 05-09-1996 |
| | | DE 69601316 D | 25-02-1999 |
| | | DE 69601316 T | 26-08-1999 |
| | | JP 8253708 A | 01-10-1996 |
| | | US 5840428 A | 24-11-1998 |
| | | ZA 9601315 A | 29-07-1996 |
| EP 0469613 A | 05-02-1992 | JP 3007121 B | 07-02-2000 |
| | | JP 4089813 A | 24-03-1992 |
| | | CA 2048248 A | 03-02-1992 |
| | | DE 69106969 D | 09-03-1995 |
| | | DE 69106969 T | 14-06-1995 |
| | | US 5171638 A | 15-12-1992 |

EPO FORM P0459

For more details about this annex : see Official Journal of the European Patent Office, No. 12/82